Europäisches Patentamt

(19) **European Patent Office**

Office européen des brevets

(11) Numéro de publication: **0 026 139**
**B1**

(12) **FASCICULE DE BREVET EUROPEEN**

(45) Date de publication du fascicule du brevet:
23.03.83

(51) Int. Cl.³: **G 02 B 7/26**

(21) Numéro de dépôt: **80401331.6**

(22) Date de dépôt: **19.09.80**

(54) Embout de connexion pour fibre optique et procédé de centrage d'une fibre optique dans un tel embout.

(30) Priorité: **21.09.79 FR 7923603**

(43) Date de publication de la demande:
**01.04.81 Bulletin 81/13**

(45) Mention de la délivrance du brevet:
**23.03.83 Bulletin 83/12**

(84) Etats contractants désignés:
**DE GB IT**

(56) Documents cités:
**FR-A-2 349 843**

(73) Titulaire: **SOCAPEX, 10 bis, quai Léon-Blum,
F-92153 Suresnes (FR)**

(72) Inventeur: **Malsot, Christian, "THOMSON-CSF"
SCPI 173, Bld Haussmann, F-75360 Paris Cedex 08 (FR)**

(74) Mandataire: **Vesin, Jacques et al, THOMSON-CSF
SCPI 173, Bld Haussmann, F-75379 Paris Cedex 08 (FR)**

## Embout de connexion pour fibre optique et procédé de centrage d'une fibre optique dans un tel embout

L'invention a pour objet un embout de connexion autocentrant pour fibre optique et le procede de centrage et d'immobilisation de cette fibre optique dans l'embout.

Différentes techniques assurant le positonnement d'une fibre optique dans un embout de connexion ont déjà été proposées. Parmi celles-ci on peut citer les embouts de connexion à trois piges ou comportant des tubes capillaires, ou encore utilisant des rainures en forme de V. Il est également connu de réaliser des embouts de fibres optiques utilisant la technique de surmoulage de ces fibres optiques. Mais ce surmoulage, qui est effectué directement sur la fibre, nécessite l'usage de moules qui se dégradent peu à peu au cours de leurs emplois successifs.

Il est connu du brevet français 2 349 843 d'injecter axialement une matière fluable dans un embout de connexion de fibres optiques de manière à maintenir en coïncidence l'axe de la fibre et celui de l'embout. On constate toutefois en pratique qu'un tel système nécessite une parfaite symétrie des forces utiles et des frottements exercés sur le matériau fluable. Les pièces réalisées par usinage présentent toujours nécessairement quelques défauts (rayures, etc . . .) tandis que le matériau fluable injecté ne présente pas toujours l'homogénéité souhaitée. On constate donc en pratique que l'injection axiale de matériaux fluables dans de tels embouts privilégie ainsi une direction des forces par rapport aux autres ce qui conduit à un décentrage de la fibre de quelques microns.

L'embout de connexion pour fibre optique et le procédé de centrage d'une fibre dans un tel embout selon l'invention permettent d'éviter ces inconvénients.

Dans l'embout de connexion pour fibres optiques suivant l'invention, la fibre optique est directement scellée dans son embout, la référence extérieure de centrage de la fibre étant donc dans ce cas l'embout lui-même.

Suivant l'invention, un embout de connexion autocentrant pour fibre optique, comprenant au moins un élément cylindrique d'axe XX muni axialement d'un canal destiné à recevoir la fibre optique et dans lequel element peut être injecté un matériau de scellement est caractérisé en ce qu'il comporte des moyens permettant d'imprimer au matériau de scellement un mouvement giratoire d'axe XX de façon à soumettre une partie au moins de la fibre optique placée dans l'embout à des forces rotationnelles assurant son centrage dans le canal.

Egalement suivant l'invention, un procédé de centrage d'une fibre optique dans un embout de connexion d'axe X-X au moyen d'un matériau de scellement de la fibre optique, est caractérisé en ce que l'on imprime au matériau de scellement injecté dans l'embout de connexion un mouvement giratoire d'axe XX de façon à soumettre une partie au moins de la fibre optique placée dans l'embout à des forces rotationelles.

L'invention sera mieux comprise et d'autres caractéristiques apparaîtront à l'aide de la description ci-après et des dessins qui l'accompagnent et sur lesquels:

la figure 1 représente un premier exemple de réalisation suivant l'invention;

les figures 2 à 4 montrent des détails de l'embout représenté en figure 1;

la figure 5 représente un dispositif permettant d'introduire le matériau de scellement dans l'embout de connexion suivant l'invention;

la figure 6 représente un autre exemple de réalisation d'un embout de connexion suivant l'invention;

les figures 7 et 8 montrent des détails de l'embout représenté en figure 6;

la figure 9 représente un dispositif de centrage de la fibre optique utilisé avec un embout de connexion tel que représenté en figure 6.

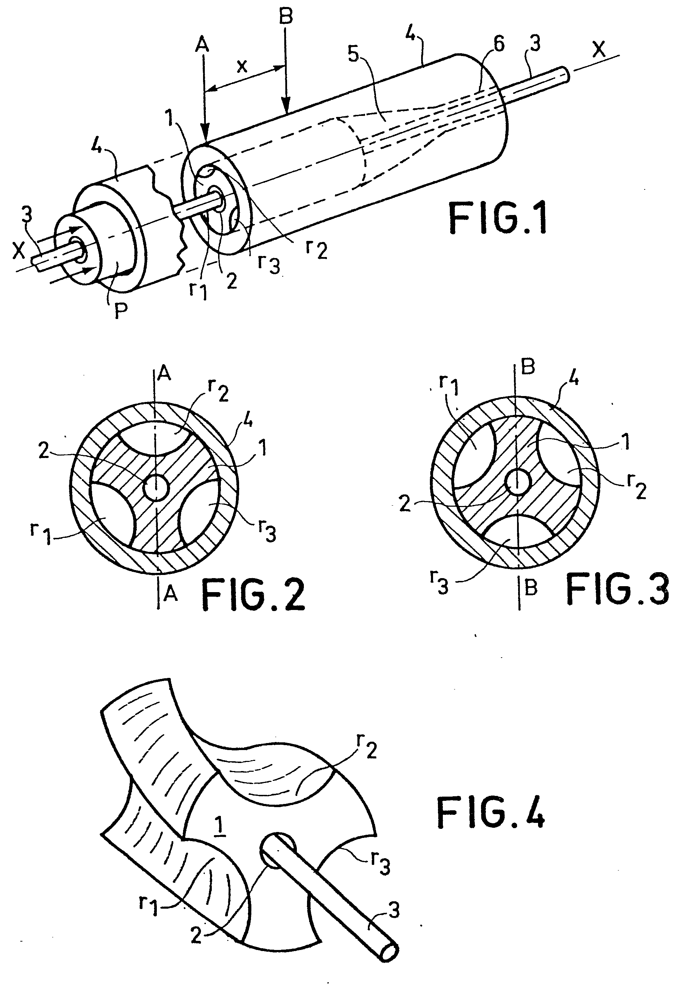

La figure 1 montre un premier exemple de réalisation d'un embout de connexion auto-centrant pour fibre optique, suivant l'invention. Cet embout comprend:

— une structure 1 hélicoïdale d'axe XX, munie axialement d'un canal 2 destiné au passage de la fibre optique 3 et présentant à sa périphérie trois rainures $r_1$, $r_2$, $r_3$ hélicoïdales d'axe XX;
— un élément 4 cylindrique formant un manchon et comportant intérieurement, à l'une de ses extrêmités, un cône 5 terminé par un canal 6 dans lequel peut glisser librement la fibre optique 3.

Le manchon 4, dans lequel est introduite la structure 1 hélicoïdale, délimite les rainures $r_1$, $r_2$, $r_3$ hélicoïdales. Les figures 2 et 3 représentent respectivement les coupes transversales suivant AA et BB de l'embout de connexion représenté en figure 1. La figure 4 montre, en perspective, une portion de la structure 1 hélicoïdale.

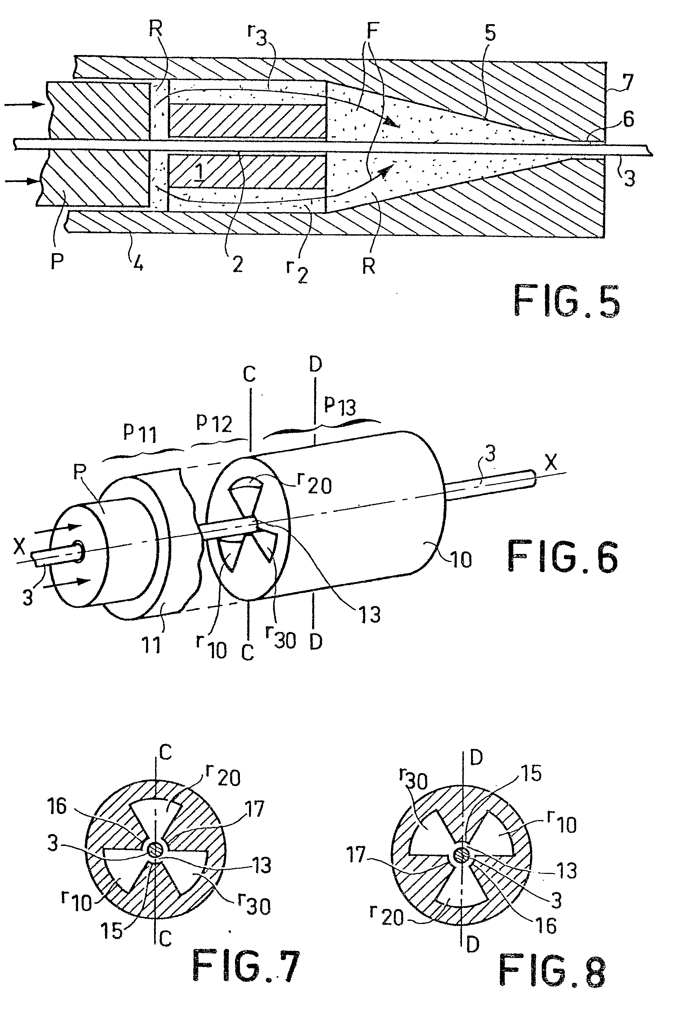

Le centrage et l'immobilisation de la fibre optique 3 s'effectue au moyen d'un matériau de scellement de la façon suivante:
un piston P (figure 5) cylindrique est placé dans le manchon 4 à l'extrémité opposée au cône 5 et canal 6, après introduction du matériau de scellement (une résine R polymérisable par exemple) dans le manchon 4. Le piston P permet de pousser la résine R dans les rainures $r_1$, $r_2$, $r_3$ hélicoïdales, puis dans le cône 5 et le canal 6, exerçant sur la fibre optique 3, dans ce cône 5 et ce canal 6, des forces giratoires réparties autour de la fibre optique 3 et réalisant un centrage précis de cette fibre optique 3 dans l'embout. La résine R, après polymérisation, immobilise la fibre optique 3 convenablement centrée.

Le pas des rainures $r_1$, $r_2$, $r_3$ hélicoïdales est choisi en fonction de la viscosité du matériau de scellement utilisé.

Les forces F appliquées sur la fibre optique 3 par le matériau de scellement (résine R) sont plus faibles que la force axiale appliquée sur le piston P et assurent des contraintes régulières le long de cette fibre optique 3.

Après la polymérisation du matériau de scellement, on procède à une rectification de la face 7 de l'embout (figure 5) par sciage et/ou par polissage de façon à obtenir une surface convenable pour le raccordement des fibres optiques 3 placées dans leur embout respectif suivant l'invention.

La figure 6 représente un autre exemple de réalisation d'un embout auto-centrant pour fibres optiques, suivant l'invention.

Cet embout comprend un élément 10 cylindrique d'axe XX, présentant une portion $p_{11}$ formant un machon 11 cylindrique, une portion $p_{12}$ munie intérieurement d'une cône 12 coaxial non représenté et d'une portion $p_{13}$ munie dans la zone axiale d'un évidement formant n rainures $r_{10}$, $r_{20}$, $r_{30}$ hélicoïdales identiques (n = 3 dans l'exemple représenté) et délimitant un canal 13 axial dans lequel peut glisser librement la fibre optique 3 comme montré en figures 7 et 8 représentant respectivement les coupes transversales suivant CC et DD de l'embout de la figure 6.

Ce canal 13 axial est en fait délimité par les parties rentrantes de la structure hélicoïdale qui forment trois mors 15, 16, 17 entre lesquels peut passer librement la fibre optique 3.

Le centrage de la fibre optique 3 dans l'embout est obtenu de la façon suivante:
Un piston P est placé dans la portion $p_{11}$ du bloc 10, après introduction du matériau de scellement (résine R) dans cette portion $p_{11}$. Sous l'effort axial appliqué au piston P, la résine R traverse les rainures $r_{10}$, $r_{20}$, $r_{30}$ soumettant la fibre optique 3 à un ensemble de forces giratoires qui la centrent dans l'embout. Après polymérisation de la résine R, la fibre optique 3 est immobilisée.

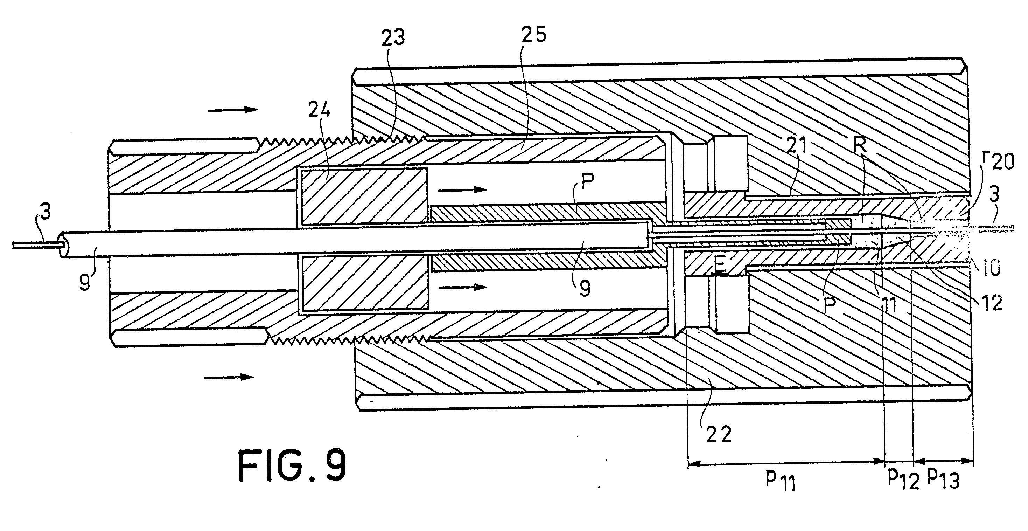

La figure 9 représente un exemple de réalisation d'un dispositif utilisé pour l'opération de scellement.

L'embout de connexion E est inséré librement dans un orifice 21 d'un élément de montage 22 comportant à son extrémité libre un taraudage 23. Un cavalier 24 est positionné sur la fibre optique munie d'une gaine 9. Un bouchon 25 fileté peut venir se visser dans le taraudage 23 de l'élément 22 transmettant un effort axial au cavalier 24 qui pousse le piston P dans l'embout E, lui-même poussant le matériau R de scellement qui pénètre successivement dans le cône 12, et dans les rainures $r_{10}$, $r_{20}$, $r_{30}$ de l'élément 10.

Un tel dispositif associé à l'embout E de connexion permet aisément de centrer et d'immobiliser la fibre optique 3 dans cet embout.

Après polymérisation du matériau de scellement, le bouchon fileté 25 et l'élément 22 sont séparés l'un de l'autre et le cavalier 24 retiré de la gaine de la fibre par translation arrière.

Bien entendu, de manière connue en soi, la pièce 24 et la pièce 25 peuvent comporter une fente latérale permettant de les extraire facilement de la gaine de la fibre 9 par glissement latéral.

## Revendications

1. Embout de connexion pour fibre optique comprenant un élément cylindrique (4, 10) d'axe XX muni axialement d'un canal (2, 5, 6; 11, 12, 13) destiné à recevoir la fibre optique (3) et dans lequel élément peut être injecté un matériau de scellement (R), caractérisé en ce qu'il comporte des moyens permettant d'imprimer au matériau de scellement un mouvement giratoire d'axe XX de façon à soumettre une partie au moins de la fibre optique placée dans l'embout à des forces rotationnelles assurant son centrage dans le canal.

2. Embout de connexion suivant la revendication 1, caractérisé en ce que les moyens permettant d'imprimer au matériau de scellement un mouvement giratoire d'axe XX comprennent une structure hélicoïdale (1, $p_{13}$) munie axialement d'un canal pour le passage de la fibre optique (3) et délimitant au moins une rainure hélicoïdale, dans laquelle peut être injecté le matériau de scellement (R).

3. Embout de connexion suivant la revendication 2, caractérisé en ce que la structure hélicoïdale possède trois rainures hélicoïdales ($r_1$, $r_2$, $r_3$, $r_{10}$, $r_{20}$, $r_{30}$).

4. Embout de connexion suivant l'une quelconque des revendications 2 et 3, caractérisé en ce que les rainures hélicoïdales ($r_1$, $r_2$, $r_3$) sont réalisées à la périphérie de la structure (1), en ce que l'élément cylindrique (4) présente, à l'une de ses extrémités, la forme d'un manchon dans lequel est placée la structure.

5. Embout de connexion suivant l'une quelconque des revendications 2 et 3, caractérisé en ce que les rainures hélicoïdales sont réalisées dans la zone axiale de la structure, cette structure (1) constituant une partie de l'élément cylindrique (4).

6. Embout de connexion suivant l'une quelconque des revendications 2 à 5, caractérisé en ce que le matériau de scellement (R) est injecté dans les rainures hélicoïdales au moyen d'un piston (P).

7. Dispositif permettant le scellement de l'embout suivant la revendication 6, caractérisé en ce qu'il comprend un élément (22) de montage muni axialement d'un canal (21) dans lequel peut être inséré l'embout (E), cet élément (22) de montage comportant, à l'extrémité opposée à celle où est placé l'embout (E), un taraudage (23); en ce qu'un cavalier (24) est positionné temporairement autour de la fibre optique (3) munie d'une gaine (G); et en ce qu'un bouchon (25) fileté peut venir se visser temporairement dans le taraudage (23) de l'élément (22) de montage et permet de pousser, par l'intermédiaire du cavalier (24) le piston P lui-même destiné à injecter le matériau (R) de scellement dans l'embout (E).

8. Procédé de centrage d'une fibre optique dans un embout de connexion d'axe XX au moyen d'un matériau de scellement, caractérisé en ce qu'on imprime au matériau de scellement injecté dans l'embout de connexion un mouvement giratoire d'axe XX de façon à soumettre une partie au moins de la fibre optique placée dans l'embout à des forces rotationelles.

## Patentansprüche

1. Verbindungsstück für einen Lichtleiter mit einem eine Achse XX besitzenden zylindrischen Element (4, 10), das eine den Lichtleiter (3) aufnehmende Bohrung (2, 5, 6, 11, 12, 13) aufweist und in welches ein Versiegelungsmaterial (R) einspritzbar ist, dadurch gekennzeichnet, daß es Mittel aufweist, um dem Versiegelungsmaterial eine Drehbewegung um die Achse XX mitzuteilen, derart, daß wenigstens ein Teil des in das Verbindungsstücke eingesetzten Lichtleiters Drehkräften unterworfen wird, durch welche die Zentrierung des Lichtleiters in der Bohrung erzielt wird.

2. Verbindungsstück nach Anspruch 1, dadurch gekennzeichnet, daß die Mittel, die dem Versiegelungsmaterial eine Drehbewegung um die Achse XX mitteilen eine schraubenförmige Struktur (1, $p_{13}$) umfassen, die einen axialen Kanal zur Aufnahme des Lichtleiters (3) aufweisen und wenigstens eine Schraubennut begrenzen, in welche das Versiegelungsmaterial (R) einspritzbar ist.

3. Verbindungsstück nach Anspruch 2, dadurch gekennzeichnet, daß die schraubenförmige Struktur drei Schraubennuten ($r_1$, $r_2$, $r_3$, $r_{10}$ $r_{20}$, $r_{30}$) aufweist.

4. Verbindungsstück nach einem der Ansprüche 2 und 3, dadurch gekennzeichnet, daß die Schraubennuten ($r_1$, $r_2$, $r_3$) am Umfang der Struktur (1) angeordnet sind, und daß das zylindrische Element (4) an einem seiner Enden die Form einer Muffe besitzt, in welche die Struktur eingesetzt ist.

5. Verbindungsstück nach einem der Ansprüche 2 und 3, dadurch gekennzeichnet, daß die Schraubennuten im axialen Bereich der Struktur ausgebildet sind, wobei diese Struktur (1) einen Teil des zylindrischen Elementes (4) bildet.

6. Verbindungsstück nach einem der Ansprüche 2 bis 5, dadurch gekennzeichnet, daß das Versiegelungsmaterial (R) vermittels eines Kolbens (P) in die Schraubennuten eingespritzt wird.

7. Vorrichtung zum Versiegeln des Verbindungsstückes nach Anspruch 6, dadurch gekennzeichnet, daß sie ein Montageelement (22) aufweist, das einen axialen Kanal (21) besitzt, in welchen das Verbindungsstück (E) einführbar ist, wobei dieses Montageelement (22) an dem Ende, welches demjenigen Ende entgegengesetzt ist, welches das Verbindungsstück aufnimmt, ein Innengewinde (23) ausgebildet ist; das ein Reiterstück (24) zeitweilig un den mit einer Hülle (G) versehenen Lichtleiter herum angebracht wird; und daß ein mit einem Gewinde versehener Stopfen (25) zeitweilig in das Innengewinde (23) des Montageelementes (22) einschraubbar ist und es gestattet, vermittels des Reiterstückes (24) den Kolben P zu verschieben, welcher letzterer das Einspritzen des Versiegelungsmaterials (R) in das Verbindungsstück bewirkt.

8. Verfahren zum Zentrieren eines Lichtleiters in einem eine Achse XX besitzenden Verbindungsstück vermittels eines Versiegelungsmaterials, dadurch gekennzeichnet, daß man dem in das Verbindungsstück eingespritzten Versiegelungsmaterial eine Drehbewegung um die Achse XX mitteilt, derart, daß wenigstens ein Teil des in dem Verbindungsstück befindlichen Lichtleiters Drehkräften unterworfen wird.

## Claims

1. A connecting piece for an optical fibre, comprising a cylindrical element (4, 10) having an axis XX and being provided with an axial bore (2, 5, 6, 11, 12, 13) adapted to receive said optical fibre (3), while a sealing material (R) is adapted to be injected into said element, characterized in that it comprises means adapted to impart to said sealing material a rotary movement about said axis XX, so as to subject at least a portion of said optical fibre placed in the connecting place to rotational forces which ensure its centering within said bore.

2. A connecting piece according to claim 1, characterized in that said means for imparting to said sealing material a rotary movement about said axis XX comprises a helical structure (1, $p_{13}$) provided with an axial channel for the passage of said optical fibre (3), said channel delimiting at least one helical groove into which said sealing material (R) is adapted to be injected.

3. A connecting piece according to claim 2, characterized in that said helical structure is provided with three helical grooves ($r_1$, $r_2$, $r_3$, $r_{10}$, $r_{20}$, $r_{30}$).

4. A connecting piece according to any one of claims 2 and 3, characterized in that said helical grooves ($r_1$, $r_2$, $r_3$) are formed at the periphery of said structure (1), and in that said cylindrical element (4) has at one of its ends the shape of a collar into which said structure is placed.

5. A connecting piece according to any one of claims 2 and 3, characterized in that said helical grooves are formed in the axial zone of said structure, which structure (1) constitutes a part of said cylindrical element (4).

6. A connecting piece according to any one of claims 2 to 5, characterized in that said sealing material (R) is injected into said helical grooves by means of a piston (P).

7. A device for sealing the connecting piece according to claim 6, characterized in that it comprises a mounting element (22) provided with an axial channel (21) into which said connecting piece (E) is adapted to be introduced, said mounting element (22) comprising, at the end which is opposed to the one receiving said connecting piece (E), an inner thread (23); in that a link member (24) is placed temporarily around said optical fibre (3) provided with a sheath (G); and in that a threaded plug (25) is adapted to be screwed temporarily into said inner thread (23) of said mounting element (22) and allows said piston P to be pushed by the intermediary of said link member (24), which piston is adapted to inject the sealing material (R) into the noccecting piece (E).

8. A process of centering an optical fibre in a connecting piece having an axis XX by means of a sealing material, characterized in that a rotary movement about said axis XX is imparted to the sealing material injected into said connecting piece, so as to subject at least a portion of said optical fibre placed in said connecting piece to rotational forces.

FIG.1

FIG.2

FIG.3

FIG.4

FIG.5

FIG.6

FIG.7

FIG.8

FIG. 9